Europäisches Patentamt

**European Patent Office**

Office européen des brevets

(19)

(11) Numéro de publication: **0 373 719 B1**

## (12) FASCICULE DE BREVET EUROPEEN

(45) Date de publication de fascicule du brevet: **26.01.94**  (51) Int. Cl.⁵: **G02B 15/10**

(21) Numéro de dépôt: **89203150.1**

(22) Date de dépôt: **11.12.89**

---

(54) **Système optique bifocal.**

---

(30) Priorité: **16.12.88 FR 8816642**

(43) Date de publication de la demande:
**20.06.90 Bulletin 90/25**

(45) Mention de la délivrance du brevet:
**26.01.94 Bulletin 94/04**

(84) Etats contractants désignés:
**DE FR GB NL**

(56) Documents cités:
**DE-A- 2 230 533**

**PATENT ABSTRACTS OF JAPAN, vol. 7, no.
216 (P-225)[1361], 24 septembre 1983; & JP-
A-58 108 510**

**SOVIET INVENTIONS ILLUSTRATED, Derwent
Publications Ltd, Londres, GB, section P81,
semaine 8426, 8 août 1984; & SU A 477164**

(73) Titulaire: **TELECOMMUNICATIONS RADIOE-
LECTRIOUES ET TELEPHONIOUES T.R.T.
88, rue Brillat Savarin
F-75013 Paris(FR)**

(84) Etats contractants désignés:
**FR**

(73) Titulaire: **THOMSON-TRT DEFENSE
Rue Guynemer
F-78280 Guyancourt(FR)**

(84) Etats contractants désignés:
**DE GB NL**

(72) Inventeur: **Rollin, Joel
Société CIVILE S.P.I.D.
209 rue de l'Université
F-75007 Paris(FR)**
Inventeur: **Perrin, Jean-Claude
Société CIVILE S.P.I.D.
209 rue de l'Université
F-75007 Paris(FR)**

(74) Mandataire: **Pyronnet, Jacques et al
Société Civile S.P.I.D.
156, Boulevard Haussmann
F-75008 Paris (FR)**

---

Rank Xerox (UK) Business Services
(3.10/3.09/3.3.3)

**Description**

La présente invention concerne un système optique bifocal, ayant un agencement longue focale LF composé d'un objectif à lentilles fixes constitué d'un groupe avant et d'un groupe arrière, et un agencement courte focale SF obtenu par adjonction entre le groupe avant et le groupe arrière de l'agencement longue focale d'un groupe intermédiaire au moyen d'un barillet mobile.

Un système optique de ce type, à trois groupes de lentilles, est décrit dans le brevet des Etats-Unis d'Amérique n° 4 449 791. Dans ce brevet le système optique est du type objectif zoom, c'est-à-dire que la variation de focale est obtenue par translation des deuxième et troisième groupes selon l'axe optique. Dans un système optique bifocal de ce genre les longue et courte focales peuvent être obtenues par translation d'un seul groupe, ce qui présente l'avantage d'une réalisation à faible encombrement. Cependant le choix d'une telle solution suppose l'établissement de tolérances de positionnement du barillet mobile très sévères pour obtenir une bonne stabilité d'axe en longue focale en évitant un décalage latéral de l'image dans le plan focal par suite des jeux de déplacement du barillet, ce qui rend une telle réalisation délicate et onéreuse. Une solution moins onéreuse pour conserver une bonne stabilité d'axe en longue focale est de déterminer la longue focale uniquement à partir de lentilles fixes alors que le passage en courte focale est obtenu par basculement du barillet autour d'un axe perpendiculaire à l'axe optique. Une telle solution est proposée dans la publication SPIE, vol. 131, Practical Infrared Optics (1978), page 24, mais comporte l'inconvénient d'être particulièrement encombrante.

L'invention a pour but de remédier à ces différents inconvénients et propose des moyens pour réduire la complexité et le coût du système tout en conservant l'avantage d'un faible encombrement.

Pour cela le système optique du genre mentionné dans le préambule est remarquable en ce que le groupe avant de distance focale LF/$\gamma$ est convergent et comporte trois lentilles, le groupe arrière est convergent et comporte une lentille de grandissement $\gamma$, alors que l'adjonction du groupe intermédiaire est réalisée par basculement du barillet mobile autour d'un axe parallèle à l'axe optique, le groupe intermédiaire étant convergent, constitué de 4 lentilles et ayant pour grandissement $\gamma' = $ SF/LF.

En outre, la présente invention est particulièrement adaptée à un système d'observation mixte jour/nuit dans lequel le système optique bifocal forme une image de la scène en voie jour, par exemple sur une barrette CCD ou reprend par l'intermédiaire d'un prisme mélangeur l'image d'une barrette de diodes issues d'un système de vision thermique (voie nuit). Ainsi dans des applications telles que l'observation mixte jour/nuit, pour doser l'éclairement de la voie jour par rapport à la voie nuit, un iris réglable est placé en amont (ceci pour agir uniquement sur la voie jour) du couplage voie jour-voie nuit. Certains inconvénients apparaissent du fait de l'utilisation d'un tel couplage. Ainsi un problème de vignettage dans le champ en voie jour est créé par l'iris placé en avant, si la pupille d'entrée du système n'est pas conservée au voisinage dudit iris. De plus se pose un problème de conservation de l'éclairement de la voie nuit lors de la commutation de champ.

Selon une caractéristique du système selon l'invention lorsque celui-ci est utilisé dans un dispositif d'observation mixte jour/nuit possédant en amont un iris réglable, il comporte de plus un diaphragme d'ouverture solidaire du barillet mobile pour la conservation de l'éclairement de la voie nuit lors de la commutation en courte focale, le diaphragme étant situé au voisinage du groupe avant.

En effet, pour une combinaison optique considérée, le choix selon l'invention d'un basculement du barillet mobile autour d'un axe parallèle à l'axe optique présente différents avantages. D'une part il rend possible l'adjonction d'un diaphragme d'ouverture au voisinage du groupe avant puisqu'avec un tel basculement une place minimum est occupée le long de l'axe optique. D'autre part il autorise l'établissement de tolérances de positionnement du barillet mobile très larges et ceci toujours pour une combinaison optique considérée.

En outre, en voie nuit, la conservation de l'éclairement lors de la commutation de champ est obtenue indépendamment et autrement que par le réglage de la luminance des diodes émettrices. En effet, lors de la commutation de longue en courte focale il y a réduction de taille de la pupille d'entrée dans le rapport des focales. Ainsi la conservation d'une étendue géométrique constante sur l'axe, c'est-à-dire la conservation de l'angle définissant l'ouverture numérique image, est rendue possible par l'adjonction d'un diaphragme d'ouverture au système par l'intermédiaire du barillet.

Selon une autre caractéristique du système selon l'invention utilisé dans un dispositif d'observation mixte jour/nuit le groupe avant est choisi avec une ouverture relative de valeur faible, le groupe intermédiaire a une valeur de grandissement $\gamma'$ voisine de l'unité, alors que le groupe arrière a pour grandissement $\gamma \simeq \gamma'/2$, une telle configuration étant très favorable pour la détermination du barillet mobile et donc pour l'implantation mécanique dudit barillet mobile.

Ainsi, du fait de l'ouverture relative du groupe avant très modeste, par exemple F/15, et de la valeur de grandissement du groupe intermédiaire $\gamma$ ' assez voisine de l'unité, par exemple $\gamma$ ' = 2/3 (fixé par le rapport des focales : $\gamma$ ' = SF/LF), le système de basculement peut être simple et n'a pas besoin d'assurer un positionnement latéral du groupe intermédiaire très sévère. Typiquement, un excentrement (c'est-à-dire un écart entre l'axe principal du système et l'axe du barillet en position courte focale) de 200 $\mu$m et donc une précision de positionnement de l'axe du barillet par rapport à l'axe optique de l'ordre de 200 $\mu$m sont tout à fait tolérables et n'entraînent que des chutes acceptables de MTF (Modulation Transfer Function).

Egalement, du fait du grandissement $\gamma$ du groupe arrière assez faible, par exemple $\gamma \simeq$ 0,34, et du grandissement $\gamma$ ' du groupe intermédiaire voisin de l'unité, l'excentrement du barillet mobile produit des décalages d'image modestes au niveau du plan focal.

Un tel système assure donc une stabilité d'axe tout à fait convenable en courte focale et parfaite en longue focale.

En ce qui concerne le vignettage en voie jour, le système optique selon l'invention est, en longue focale, optimisé de façon à rejeter la pupille d'entrée en avant, au voisinage de l'iris de tête. En courte focale, la présence d'un diaphragme d'ouverture au voisinage du groupe avant de par le choix de basculement du barillet mobile, permet de ne pas rejeter la pupille d'entrée trop à l'intérieur du groupe avant c'est-à-dire trop loin de l'iris de tête et ainsi de minimiser le vignettage en voie jour. L'adjonction d'un diaphragme d'ouverture en courte focale dans le système optique permet la conservation de l'éclairement de la voie nuit lors du basculement du barillet.

La description suivante en regard des dessins annexés, le tout donné à titre d'exemple, fera bien comprendre comment l'invention peut être réalisée.

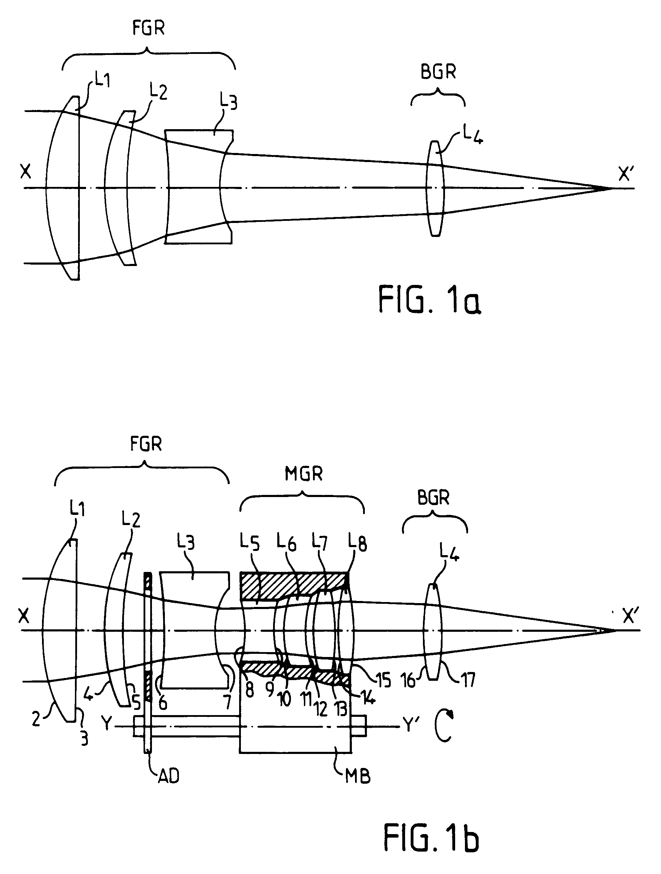

La figure 1 représente un schéma optique d'un exemple de réalisation du système selon l'invention. La figure 1a montre le système dans sa position longue focale alors que la figure 1b le montre dans sa position courte focale.

Sur la figure 1a et selon un exemple de réalisation non limitatif, le système optique bifocal de longue focale LF est composé d'un objectif à lentilles fixes constitué d'un groupe avant FGR et d'un groupe arrière BGR centrés sur l'axe optique XX'. Conformément à l'invention le groupe avant de distance focale LF/$\gamma$ est convergent et comporte 3 lentilles L1, L2 et L3 et le groupe arrière est également convergent et comporte 1 lentille L4 de grandissement $\gamma$. Le système est optimisé (voir données de construction ci-après) en longue focale de manière à rejeter la pupille d'entrée en avant, au voisinage de l'iris de tête (non représenté sur le dessin).

Sur la figure 1b le système optique est représenté en position courte focale SF. Cette position est obtenue par adjonction entre le groupe avant FGR et le groupe arrière BGR d'un groupe intermédiaire MGR au moyen d'un barillet mobile MB (représenté en coupe partielle) qui selon l'invention bascule autour d'un axe YY' parallèle à l'axe optique XX'. Le groupe intermédiaire est convergent, il est constitué de 4 lentilles L5, L6, L7, L8 et a pour grandissement $\gamma$ ' = SF/LF.

Selon une caractéristique de l'invention, lorsque le système est utilisé dans un dispositif d'observation mixte jour/nuit possédant en amont un iris réglable pour le dosage de l'éclairement de la voie jour par rapport à la voie nuit, il est avantageux qu'il comporte de plus un diaphragme d'ouverture AD (représenté en coupe partielle) solidaire du barillet mobile MB pour la conservation de l'éclairement de la voie nuit lors de la commutation en courte focale, le diaphragme étant de préférence (et ceci est possible grâce au choix du mode de basculement) situé au voisinage du groupe avant FGR afin de maintenir la pupille d'entrée du système au plus près de l'iris de tête et ainsi minimiser le vignettage en voie jour. Sur le dessin le diaphragme AD est, une fois en position, placé entre la lentille L2 et la lentille L3 du groupe avant FGR, il pourrait bien sûr être placé après la lentille L3.

Suivant une autre caractéristique du système selon l'invention utilisé dans un dispositif d'observation jour/nuit, le groupe avant FGR (L1, L2, L3) est choisi avec une ouverture relative de valeur faible, par exemple F/15, le groupe intermédiaire MGR (L5, L6, L7, L8) a une valeur de grandissement $\gamma$ ' peu inférieure à l'unité, ici $\gamma$ ' $\simeq$ 2/3, alors que le groupe arrière BGR (L1) a pour grandissement $\gamma \simeq \gamma$ '/2, ici $\gamma \simeq$ 0,34.

Les surfaces optiques des lentilles L1, L2, L3 sont, sur le dessin, dans l'ordre référencées 2 à 7, les surfaces optiques des lentilles L5, L6, L7, L8 sont référencées 8 à 15 et les surfaces optiques de la lentille L4 sont référencées 16 et 17.

Dans l'exemple de réalisation proposé la longue focale LF a pour valeur 130 mm et la courte focale SF a pour valeur 86,66 mm. Les données de construction en courte focale sont les suivantes et ceci relativement aux références portées sur le schéma de la figure 1b.

3

| N° de la surface | Rayon | Matériau suivant | Epaisseur suivante |
|---|---|---|---|
| 2 | 45,073 | BALF5 | 8,581 |
| 3 | - 1090,367 | AIR | 5,637 |
| 4 | 39,611 | LAK21 | 5,680 |
| 5 | 84,688 | AIR | 8,787 |
| 6 | - 293,757 | SF6 | 13,064 |
| 7 | 21,752 | AIR | 6,693 |
| 8 | - 33,773 | SK5 | 6,865 |
| 9 | 47,715 | AIR | 2,703 |
| 10 | 45,052 | SF6 | 4,881 |
| 11 | 25,250 | AIR | 1,092 |
| 12 | 29,141 | SK11 | 6,104 |
| 13 | - 120,174 | AIR | 1,102 |
| 14 | 113,326 | FK3 | 3,379 |
| 15 | - 37,859 | AIR | 17,093 |
| 16 | 87,406 | BAF4 | 3,426 |
| 17 | - 64,601 | AIR | 40,945 |

où "rayon" signifie le rayon de courbure de la surface référencée, "épaisseur suivante" signifie l'intervalle à respecter depuis ladite surface référencée jusqu'à la surface référencée suivante, intervalle mesuré le long de l'axe optique, "rayon" et "épaisseur suivante" sont exprimés en millimètres.

Une telle formule optique et son système de basculement sont avantageux et trouvent particulièrement bien application dans des dispositifs d'observation mixte jour/nuit. De par leur conception ils autorisent aux différents avantages suivants :

- réduction significative du vignettage dans le champ en voie jour essentiellement créé par l'iris de tête (utilisé dans ce type d'application),
- conservation de l'éclairement de la voie nuit lors de la commutation de champ, indépendamment et autrement que par le réglage de la luminance des diodes émettrices,
- stabilité d'axe parfaite en longue focale et très convenable en courte focale en vue d'applications telles que la visée,
- grande simplicité et faible encombrement des dispositifs de changement de champ manuels ou motorisés.

**Revendications**

1. Système optique bifocal, ayant un agencement longue focale LF composé d'un objectif à lentilles fixes constitué d'un groupe avant (FGR) et d'un groupe arrière (BGR), et un agencement courte focale SF obtenu par adjonction entre le groupe avant et le groupe arrière de l'agencement longue focale d'un groupe intermédiaire (MGR) au moyen d'un barillet mobile (MB), caractérisé en ce que le groupe avant de distance focale $LF/\gamma$ est convergent et comporte 3 lentilles (L1,L2,L3,), le groupe arrière est convergent et comporte une lentille (L4) de grandissement $\gamma$ alors que l'adjonction du groupe intermédiaire est réalisée par basculement du barillet mobile autour d'un axe (Y-Y') parallèle à l'axe optique(X-X'), le groupe intermédiaire étant convergent, constitué de 4 lentilles (L5,L6,L7,L8) et ayant pour grandissement $\gamma ' = SF/LF$.

2. Système optique bifocal selon la revendication 1 utilisé dans un dispositif d'observation mixte jour/nuit possédant en amont un iris réglable pour le dosage de l'éclairement de la voie jour par rapport à la voie nuit, comportant de plus un diaphragme d'ouverture (AD) solidaire du barillet mobile pour la conservation de l'éclairement de la voie nuit lors de la commutation en courte focale, le diaphragme étant situé au voisinage du groupe avant.

3. Système optique bifocal selon la revendication 1 ou 2 utilisé dans un dispositif d'observation mixte jour/nuit, dans lequel le groupe avant est choisi avec une ouverture relative de valeur faible, le groupe intermédiaire a une valeur de grandissement $\gamma'$ peu inférieure à l'unité, alors que le groupe arrière a pour grandissement $\gamma \simeq \gamma'/2$.

4. Système optique bifocal selon l'une des revendications 1 à 3, dans lequel les lentilles qui le composent sont réalisées et ajustées conformément au tableau de valeurs qui suit, dans lequel le mot "rayon" indique le rayon de courbure de la surface référencée, les mots "épaisseur suivante" indiquent l'intervalle à respecter depuis ladite surface référencée jusqu'à la surface référencée suivante, intervalle mesuré le long de l'axe optique pour l'obtention de la courte focale, "rayon" et "épaisseur suivante" étant exprimés en millimètres :

| N° de la surface | Rayon | Matériau suivant | Epaisseur suivante |
|---|---|---|---|
| 2 | 45,073 | BALF5 | 8,581 |
| 3 | - 1090,367 | AIR | 5,637 |
| 4 | 39,611 | LAK21 | 5,680 |
| 5 | 84,688 | AIR | 8,787 |
| 6 | - 293,757 | SF6 | 13,064 |
| 7 | 21,752 | AIR | 6,693 |
| 8 | - 33,773 | SK5 | 6,865 |
| 9 | 47,715 | AIR | 2,703 |
| 10 | 45,052 | SF6 | 4,881 |
| 11 | 25,250 | AIR | 1,092 |
| 12 | 29,141 | SK11 | 6,104 |
| 13 | - 120,174 | AIR | 1,102 |
| 14 | 113,326 | FK3 | 3,379 |
| 15 | - 37,859 | AIR | 17,093 |
| 16 | 87,406 | BAF4 | 3,426 |
| 17 | - 64,601 | AIR | 40,945 |

**Claims**

1. Bifocal optical system, having an arrangement of long focal length LF, which arrangement is composed of an objective which comprises fixed lenses and which is constituted by a front group (FGR) and a back group (BGR), and an arrangement of short focal length SF, which arrangement is obtained by addition, between the front group and the back group of the arrangement of long focal length, of a middle group (MGR) by means of a movable barrel (MB), characterized in that the front group of focal length $LF/\gamma$ is convergent and includes three lenses (L1, L2, L3), the back group is convergent and includes a lens (L4) of magnification $\gamma$, while the addition of the middle group is performed by tilting of the movable barrel about an axis (Y-Y') parallel to the optical axis (X-X'), the middle group being convergent and constituted by 4 lenses (L5, L6, L7, L8) and its magnification being $Y' = SF/LF$.

2. Bifocal optical system according to Claim 1, used in a mixed daylight/night observation device possessing, upstream, an adjustable iris for the regulation of the illumination of the daylight channel in relation to the night channel, further including an aperture diaphragm (AD) integral with the movable barrel for the preservation of the illumination of the night channel in the course of the switching to short focal length, the diaphragm being situated in the vicinity of the front group.

3. Bifocal optical system according to Claim 1 or 2, used in a mixed daylight/night observation device, in which the front group is selected with a relative aperture of small value, the middle group has a magnification value $\gamma'$, slightly less than unity, while the back group has a magnification of $\gamma = \gamma'/2$.

4. Bifocal optical system according to one of Claims 1 to 3, in which the lenses which form said system are constructed and adjusted in accordance with the table of values which follows, in which the word "radius" indicates the radius of curvature of the referenced surface, the words "following thickness" indicate the interval to be provided from said referenced surface to the following referenced surface, this interval being measured along the optical axis to obtain the short focal length, "radius" and "following thickness" being expressed in millimetres:

| No. of the surface | Radius | Following material | Following thickness |
| --- | --- | --- | --- |
| 2 | 45.073 | BALF5 | 8.581 |
| 3 | - 1090.367 | AIR | 5.637 |
| 4 | 39.611 | LAK21 | 5.680 |
| 5 | 84.688 | AIR | 8.787 |
| 6 | - 293.757 | SF6 | 13.064 |
| 7 | 21.752 | AIR | 6.693 |
| 8 | - 33.773 | SK5 | 6.865 |
| 9 | 47.715 | AIR | 2.703 |
| 10 | 45.052 | SF6 | 4.881 |
| 11 | 25.250 | AIR | 1.092 |
| 12 | 29.141 | SK11 | 6.104 |
| 13 | - 120.174 | AIR | 1.102 |
| 14 | 113.326 | FK3 | 3.379 |
| 15 | - 37.859 | AIR | 17.093 |
| 16 | 87.406 | BAF4 | 3.426 |
| 17 | - 64.601 | AIR | 40.945 |

**Patentansprüche**

1. Bifokales optisches System mit einer Ausgestaltung langer Brennweite LF, die aus einem Objektiv mit festen Linsen besteht, das aus einer vorderen Gruppe (FGR) und einer hinteren Gruppe (BGR) besteht, und mit einer Ausgestaltung kurzer Brennweite SF, die durch die Einfügung einer Zwischengruppe (MGR) zwischen der vorderen Gruppe und der hinteren Gruppe der Ausgestaltung mit langer Brennweite mittels eines beweglichen Körpers (MB) erhalten ist, dadurch gekennzeichnet, daß die vordere Gruppe mit einer Brennweite LF/$\gamma$ konvergent ist und drei Linsen ($L_1$, $L_2$, $L_3$) aufweist, daß die hintere Gruppe konvergent ist und eine Linse ($L_4$) mit einer Vergrößerung $\gamma$ aufweist, während die Einfügung der Zwischengruppe durch Kippen des beweglichen Körpers um eine zu der optischen Achse (X-X') parallele Achse (Y-Y') realisiert ist, wobei die Zwischengruppe konvergent ist, aus 4 Linsen ($L_5$, $L_6$, $L_7$, $L_8$)gebildet ist und als Vergrößerung $\gamma'$ = SF/LF aufweist.

2. Bifokales optisches System nach Anspruch 1 zur Verwendung in einer gemischten Tag-/Nachtbeoachtungsvorrichtung, der eine einstellbare Irisblende zur Dosierung der Beleuchtungsstärke des Tagkanals im Verhältnis zum Nachtkanal vorgeschaltet ist, das ferner eine mit dem beweglichen Körper fest verbundene Aperturblende (AD) aufweist, um die Beleuchtungsstärke des Tagkanals beim Umschalten auf die kurze Brennweite aufrechtzuerhalten, wobei sich die Blende nahe bei der vorderen Gruppe befindet.

**3.** Bifokales optisches System nach Anspruch 1 oder 2 zur Verwendung in einer gemischten Tag-/Nachtbeoabachtungsvorrichtung, bei dem die vordere Gruppe mit einer relativen Öffnung mit einem niedrigen Wert gewählt ist und die Zwischengruppe einen Vergrößerungswert $\gamma'$ wenig unter der Einheit aufweist, während die hintere Gruppe als Vergrößerung $\gamma \approx \gamma'/2$ aufweist.

**4.** Bifokales optisches System nach einem der Ansprüche 1 bis 3, bei dem die Linsen, aus denen es besteht, nach der folgenden Wertetabelle realisiert und eingestellt sind, in der das Wort "Radius" den Krümmungsradius der bezeichneten Fläche und die Wörter "folgende Dicke" den von der bezeichneten Fläche bis zu der folgenden bezeichneten Fläche einzuhaltenden Abstand angeben, wobei der Abstand längs der optischen Achse zum Erhalten der kurzen Brennweite gemessen ist und "Radius" und "folgende Dicke" in Millimeter ausgedrückt sind:

| Nr. der Fläche | Radius | folgendes Material | folgende Dicke |
|---|---|---|---|
| 2 | 45,073 | BALF5 | 8,581 |
| 3 | - 1090,367 | Luft | 5,637 |
| 4 | 39,611 | LAK21 | 5,680 |
| 5 | 84,688 | Luft | 8,787 |
| 6 | - 293,757 | SF6 | 13,064 |
| 7 | 21,752 | Luft | 6,693 |
| 8 | - 33,773 | SK5 | 6,865 |
| 9 | 47,715 | Luft | 2,703 |
| 10 | 45,052 | SF6 | 4,881 |
| 11 | 25,250 | Luft | 1,092 |
| 12 | 29,141 | SK11 | 6,104 |
| 13 | - 120,174 | Luft | 1,102 |
| 14 | 113,326 | FK3 | 3,379 |
| 15 | - 37,859 | Luft | 17,093 |
| 16 | 87,406 | BAF4 | 3,426 |
| 17 | - 64,601 | Luft | 40,945 |

EP 0 373 719 B1

FIG. 1a

FIG. 1b

8